# EUROPÄISCHE PATENTSCHRIFT

(11) **EP 0 648 005 B1**
(45) Veröffentlichungstag und Bekanntmachung des Hinweises auf die Patenterteilung: **19.11.1997**
(21) Anmeldenummer: 94115770.3
(22) Anmeldetag: 06.10.1994
(51) Int. Cl.: H02J 13/00, G05F 1/66

(54) **Vorrichtung zur Begrenzung der Leistungsaufnahme eines aus einem Energieversorgungsanschluss gespeisten Haushaltes**
Apparatus for limiting the power consumption of a household supplied by a power supply connection
Appareil pour la limitation de puissance absorbée par des appareils ménagers alimentés par l'intermédiaire d'un raccord d'alimentation en énergie

(30) Priorität: 09.10.1993 DE 4334488
(43) Veröffentlichungstag der Anmeldung: 12.04.1995
(73) Patentinhaber: Priesemuth, Wolfgang, Dipl.-Ing., 25524 Breitenburg-Nordoe (DE)
(72) Erfinder: Priesemuth, Wolfgang, Dipl.-Ing., 25524 Breitenburg-Nordoe (DE)
(74) Vertreter: Barske, Heiko, Dr. rer. nat.

(56) Entgegenhaltungen:
- WO-A-90/09050
- WO-A-93/02498
- DE-A- 2 806 426
- DE-A- 3 027 675
- DE-A- 3 426 542
- DE-A- 3 508 695
- DE-A- 4 229 277

## Beschreibung

Die Erfindung betrifft eine Vorrichtung zur Begrenzung der Leistungsaufnahme eines auf einem Energieversorgungsnetz gespeisten Haushaltes mit mehreren Verbrauchern.

Energieversorgungsnetze, an die mehrere Verbrauchereinheiten mit jeweils mehreren Verbrauchern angeschlossen sind, müssen so dimensioniert sein, daß sie den Spitzenbedarf der Verbrauchereinheiten, der auftritt, wenn viele der Verbraucher gleichzeitig in Betrieb sind, problemlos decken. Die Verbrauchereinheiten können Gewerbebetriebe, öffentliche Netze, Haushalte usw. sein, in denen jeweils mehrere Verbraucher betrieben werden, wie elektrische Maschinen, Heizgeräte, Beleuchtungen usw.. Der Gesamtenergieverbrauch der Verbrauchereinheiten fluktuiert unter statistischen Einflüssen, wobei es jedoch zu ausgeprägten Leistungsspitzen kommt, wenn beispielsweise an kalten Tagen, an denen viele elektrische Heizgeräte in Betrieb sind, zusätzlich nach einer Fernsehsendung Kochgeräte in Betrieb genommen werden, mit warmem Wasser geduscht wird usw..

Aus der DE 34 26 542 A1 ist ein Verfahren bzw. eine Einrichtung zur Lastbegrenzung in Energieversorgungsnetzen bekannt, bei dem bzw. der in Reihe mit z.B. einzelnen Haushalten zugeordneten Energieverbrauchszählern eine Einrichtung geschaltet ist, die aus einem Tonfrequenz-Rundsteuerempfänger, einem Lastwächter und einem Leistungsschalter besteht. Die Einrichtung wird von einer Zentrale her so gesteuert, daß bei Annäherung einer Gesamtnetzbelastung an die kritische Grenze eines Elektrizitätsversorgungsunternehmens der Lastbegrenzer durch den Tonfrequenz-Rundsteuerempfänger aktiviert wird und dem einzelnen Haushalt nur noch die Abnahme einer maximal festgelegten Engpaßleistung gestattet. Der Haushalt ist damit aufgefordert, die Leistungsaufnahme seiner Verbraucher so einzurichten, daß die festgelegte Engpaßleistung als Grenzwert nicht überschritten wird. Geschieht dies nicht, so wird der Haushalt von der Zentrale her vollständig abgeschaltet. Mit der beschriebenen Einrichtung kann die Spitzenbelastung elektrischer Energienetze zwar begrenzt werden; in der Praxis haben sich solche Einrichtungen jedoch nicht durchgesetzt, da die Haushalte ihren Verbrauch auf die Aufforderung hin erfahrungsgemäß nicht einschränken. Eine vollständige Abschaltung eines Haushalts ist für die Kunden völlig unakzeptabel und kann zu gefährlichen oder zumindest kostenträchtigen Nachwirkungen führen.

Aus der DE-OS 28 06 426 ist ein Belastungsregler zur Regelung des Verbrauches elektrischer Leistung durch Industrie und kommerzielle Verbraucher bekannt. Solche Regler überwachen den Leistungsverbrauch; wenn ein vorgewählter Belastungsgrenzwert erreicht wird, werden eine oder mehrere nicht wesentliche Lasten abgeschaltet; wenn die Belastung nachläßt, werden die Lasten wieder zugeschaltet. Ein Ziel der Regler besteht darin, immer nur eine minimal mögliche Zahl von Lasten abzuschalten. Als Belastungsregler sind Augenblicksregler, vorhersehende Regler und Regler mit idealer Geschwindigkeit möglich. Der in der genannten Druckschrift erläuterte Belastungsregler zeichnet sich durch eine komplexe Festlegung der Prioritäten der Lasten aus, die entsprechend ihnen gleichbleibend oder periodisch verändert zugeordneten Abschaltwertzahlen ab- und zugeschaltet werden.

Die DE 30 27 657 beschäftigt sich ebenfalls mit kommerziellen Strombeziehern. Ein Bedarfssteuersystem schaltet eine Last hoher Priorität zu und schaltet Lasten geringer Priorität ab, wenn dies erforderlich ist. Es werden unterschiedliche Steuerstrategien, ggf. mit Zeitfenster arbeitende, eingesetzt.

Aus der DE-Z: etz. (1988) H.5 Seite 210 bis 214: Paessler: "Energiekostensenkung durch Energieregelung und Rundsteuertechnik" ist eine Vorrichtung bekannt, mit der die Energiekosten durch Energieregelung gesenkt werden können, indem entsprechend der Tarifgestaltung zur Verrechnung kommende Leistungsspitzen gesenkt werden. Dazu steuert ein Energieregler steuerbare Verbraucher nach einer vorbestimmten Strategie derart, daß die verrechneten Leistungsspitzen abgesenkt werden. Stromverbraucher werden entsprechend einer vorbestimmten festgelegten Steuerstrategie derart an das Stromversorgungsnetz angeschlossen, daß die Leistungsentnahme aus dem Netz immer unter einem vorbestimmten Grenzwert bleibt. Für den Einsatz in den Haushalten ist die beschriebene Vorrichtung nicht geeignet, da im Haushalt weder die Zeitdauer noch die Rangfolge des Einschaltens der einzelnen Verbraucher vorbestimmt sind. Auf die Gesamtproblematik des Erfindungsgegenstandes, die Spitzenbelastung elektrischer Energieversorgungsnetze zu senken, ist in der genannten Druckschrift nicht eingegangen.

Der Erfindung liegt die Aufgabe zugrunde, eine Vorrichtung der eingangs beschriebenen Art zu schaffen, mit der in für den einzelnen Haushalt akzeptable Weise die Leistungsaufnahme des Haushalts und damit die Spitzenbelastung des Energieversorgungsnetzes wirksam vermindert werden kann.

Diese Aufgabe wird mit den Merkmalen des Hauptanspruchs gelöst.

In der Koordinationseinrichtung ist innerhalb des Haushaltes in einfacher Weise ein an die jeweiligen Anforderungen anpaßbares Koordinierungsprogramm festlegbar, das die Reihen- bzw. Rangfolge bestimmt, in der einzelne Verbraucher abgeschaltet werden, wenn der vorgebbare Leistungsaufnahmegrenzwert überschritten wird, und in der die einzelnen Verbraucher bei Leistungsabnahme wieder zugeschaltet werden.

Durch geeignete Wahl des Koordinationsprogramms wird erreicht, daß die Beschränkung der Leistungsaufnahme zu einer möglichst geringen Beeinträchtigung innerhalb der Verbrauchereinheit führt und daß beispielsweise auf Wünsche von zu der Verbrauchereinheit gehörenden Personen selbsttätig flexibel eingegangen wird, da beispielsweise bei jedem Abschalten eines Verbrauchers automatisch geprüft wird, ob ein oder mehrere weitere, mittels der Trennschalter gerade abgetrennte Verbraucher an die Energieversorgung angeschlossen werden können, so daß ihr Betrieb nur möglichst wenig verzögert bzw, unterbrochen wird.

Dadurch, daß die Koordinationseinrichtung nach einem Abfall der Leistungsaufnahme unter den Grenzwert einen weiteren Trennschalter schließt, wenn das Schließen eines ersten Trennschalters zu einem Überschreiten des Grenzwertes und damit erneutem Öffnen dieses Trennschalters führt, wird der Grenzwert der Leistungsaufnahme gut ausgenützt.

Mit den Merkmalen des Anspruchs 2 ist es möglich, den jeweiligen Grenzwert entsprechend der statistischen Belastung des Energieversorgungsnetzes tageszeitabhängig oder jahreszeitlich an die Möglichkeiten anzupassen. Ebenso kann das Koordinationsprogramm zeitabhängig verändert werden. Beispielsweise können tagsüber andere Prioritäten als abends oder nachts gewählt werden.

Mit den Merkmalen des Anspruchs 3 wird erreicht, daß sich das Koordinationsprogramm der Koordinationseinrichtung selbsttätig den Wünschen von Bedienungspersonen anpaßt, wobei angenommen wird, daß die Reihenfolge des Schließens der Betriebsschalter auch die Priorität des Einschaltens der zugehörigen Verbraucher festlegen soll.

Die Unteransprüche 4 bis 6 sind auf vorteilhafte konstruktive Gestaltungen der Vorrichtung gerichtet, wobei mit den Merkmalen des Anspruchs 6 ein besonders komfortabler Betrieb durch einfache Programmierbarkeit erreicht wird.

Mit den Merkmalen des Anspruchs 7 wird erreicht, daß bei mehrphasigen Stromanschlüssen jede Phase bis zu einem vorgegebenen Grenzwert belastet werden kann, wobei eine möglichst gleichmäßige Auslastung der Phasen erzielt werden soll.

Die Erfindung wird in folgendem anhand schematischer Zeichnungen beispielsweise und mit weiteren Einzelheiten erläutert.

Es stellen dar:
- Fig. 1: ein Blockschaltbild einer erfindungsgemäßen Vorrichtung,
- Fig.2: ein Programmflußbild zur Erläuterung der Funktion der Vorrichtung gemäß Fig. 1 und
- Fig. 3: eine Teilansicht einer abgeänderten Ausführungsform der erfindungsgemäßen Vorrichtung.

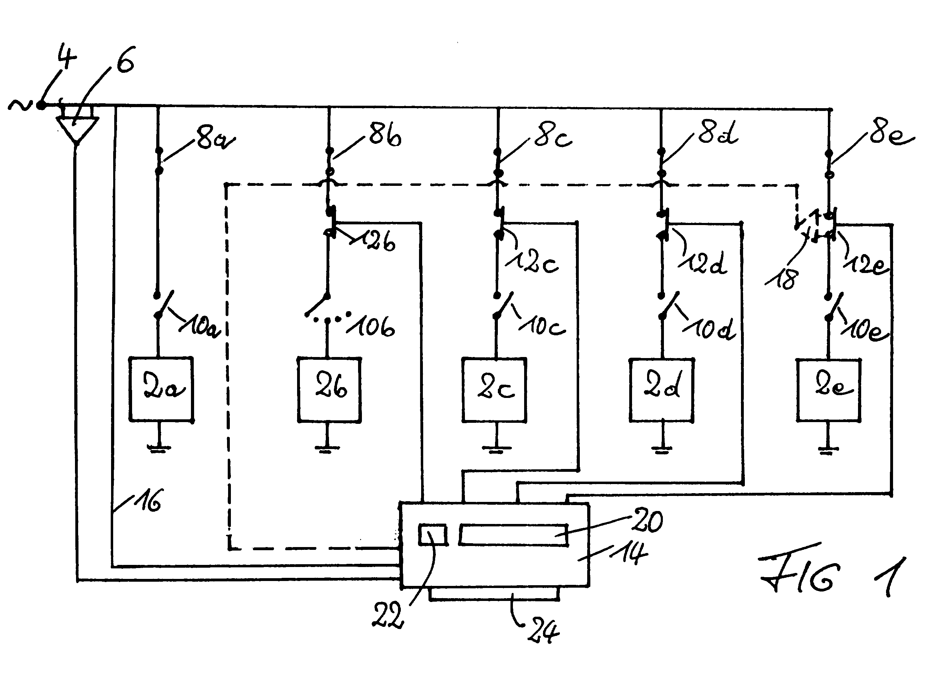

Gemäß Fig. 1 sind Verbraucher 2a bis 2e, die zu einer Verbauchereinheit, beispielsweise einem Haushalt, gehören, an einen Versorgungsanschluß 4 eines öffentlichen Stromversorgungsnetzes angeschlossen. Dem Stromversorgungsanschluß 4 nachgeschaltet ist eine Leistungsmeßeinheit 6, die an ihrem Ausgang der augenblicklichen Leistungsaufnahme aller Verbraucher entsprechendes Signal liefert.

Die einzelnen Verbraucher 2a bis 2e sind an den Stromversorgungsanschluß 4 über zugehörige Sicherungen 8a bis 8e angeschlossen und weisen Betriebsschalter 10a bis 10e auf, die manuell betätigbar sind.

Im dargestellten Ausführungsbeispiel seien 2a die über eine gemeinsame Sicherung 8a abgesicherten Lichter eines Haushalts, 2b der Herd mit unterschiedlichen Platten und einem Backofen, die über verschiedene Betriebsstellungen des Betriebsschalters 10b einschaltbar sind, 2c ein Warmwasserbereiter, 2d ein Geschirrspüler und 2e eine Waschmaschine. Zwischen den Betriebsschaltern 10b bis 10e und den Sicherungen 8b bis 8e befinden sich Trennschalter 12b bis 12e, die von einer Koordinationseinrichtung 14 her betätigbar sind. Die Koordinationseinrichtung 14 ist desweiteren mit der Leistungsmeßeinrichtung 6 verbunden und wird über eine Leitung 16 mit Strom versorgt.

Die Koordinationseinrichtung umfaßt ein Display 20, eine Zeituhr 22 und eine Eingabeeinheit 24. Die Koordinationseinrichtung 14 enthält eine programmierbare elektronische Steuereinheit, mit welcher sich die Rangfolge programmieren läßt, in der die Verbraucher 2a bis 2e in Betrieb setzbar sind, für den Fall, daß die augenblicklich von allen Verbrauchern 2a bis 2e aufgenommene Leistung einen ebenfalls programmierbaren Grenzwert überschreitet. Dabei kann der Grenzwert sich von der Uhr 22 gesteuert zwischen unterschiedlichen Werten ändern. Ebenso kann von der Uhr 22 gesteuert zwischen unterschiedlichen Priorisierungs- bzw. Koordinationsprogrammen, die über die Eingabeeinheit 24 eingebbar sind, hin- und hergeschaltet werden.

Vorteilhafterweise sind die Trennschalter 12b bis 12e und die zugehörigen Meßeinrichtungen 18b bis 18e in einem nicht dargestellten Gehäuse zusammengefaßt, welches einem die Sicherungen 8a bis 8e aufnehmendem Gehäuse benachbart ist. Bei einer Neuinstallation können die Sicherungen 8 und die Trennschalter 12 in einem gemeinsamen Gehäuse zusammengefaßt sein. Die Koordinationseinrichtung 14 selbst befindet sich vorteilhafterweise an einer bequem zugänglichen Stelle eines Haushaltes.

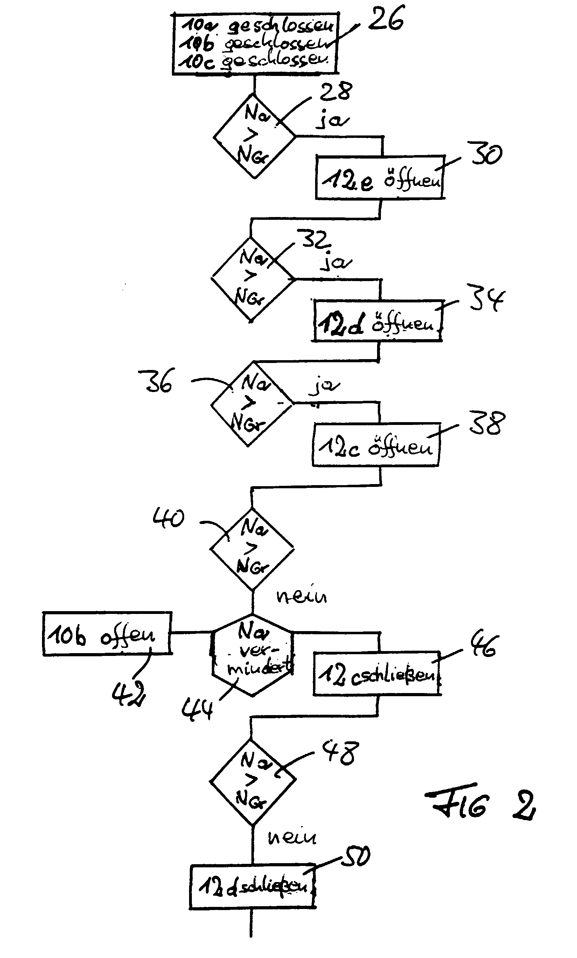

Die Funktion der beschriebenen Vorrichtung wird im folgenden anhand Fig. 2 beispielsweise erläutert. Es sei angenommen, daß das in der Koordinationseinrichtung 14 eingestellte Priorisierungsprogramm die Reihenfolge der Verbraucher wie folgt festlegt:

Das Licht 2a hat oberste Priorität und wird von der Koordinationseinrichtung 14 nicht beeinflußt. Ansonsten gilt: Herd 2b vor Warmwasserbereiter 2c vor Geschirrspüler 2d vor Waschmaschine 2e. Weiter sei angenommen, daß der voreinstellbare Grenzwert der maximalen Leistungsaufnahme auf einen Wert eingestellt ist, der erreicht wird, wenn alle Lichter 2a und alle Einzelverbraucher des Herdes 2b in Betrieb sind.

Es sei angenommen, daß in Stufe 26 die Betriebsschalter 10a, 10b und 10c geschlossen sind, wobei der Herd 2b mit allen Verbrauchern eingeschaltet sein soll. In Stufe 28 stellt die Koordinationseinrichtung fest, daß die momentane Gesamtleistungsaufnahme Nₐ über dem voreingestellten Grenzwert N_{Gr} liegt, woraufhin entsprechend der festgelegten Priorisierungsreihenfolge in Stufe 30 der Trennschalter 12e geöffnet wird. Da der Betriebsschalter 10e offen ist, wird in Stufe 32 festgestellt, daß weiterhin Nₐ über N_{Gr} liegt, woraufhin in Stufe 34 der Trennschalter 12d geöffnet wird. Da auch der Betriebsschalter 10d offen ist, wird in Stufe 36 festgestellt, daß weiterhin Nₐ über N_{Gr} liegt, woraufhin in Stufe 38 der Trennschalter 12c geöffnet wird und der Warmwasserbereiter 2c außer Betrieb gesetzt wird. In Stufe 40 wird festgestellt, daß nunmehr Nₐ nicht mehr über N_{Gr} liegt, so daß die Koordinationseinrichtung 14 keine weiteren Schaltungen veranlaßt.

Sei nun angenommen, daß in Stufe 42 der Herd 2b durch Öffnen des Betriebsschalters 10b außer Betrieb gesetzt wird. Dies bedeutet, daß das Absinken der augenblicklich aufgenommenen Leistung Nₐ in Stufe 44 von der Koordinationseinrichtung 14 erfaßt wird, woraufhin der Trennschalter 12c in Stufe 46 geschlossen wird, so daß nunmehr der Warmwasserbereiter 2c in Betrieb gesetzt wird. In Stufe 48 wird ermittelt, daß die augenblicklich aufgenommene Leistung Nₐ weiterhin nicht über dem Grenzwert N_{Gr} liegt, woraufhin der Trennschalter 12d in Stufe 50 geschlossen wird. Dem folgt wiederum, nicht mehr dargestellt, eine Überprüfung der aufgenommenen Leistung, die bei geschlossenem Betriebsschalter 10d über dem Grenzwert N_{Gr} liegt, woraufhin der Trennschalter 12d wiederum geöffnet wird usw..

Der beschriebenen Programmfluß ist nur ein Beispiel. Es sind mannigfaltige Abwandlungen und Ausführungsformen möglich. Beispielsweise kann ein Trennschalter, dessen Öffnen zu keiner Änderung der Leistungsaufnahme führt, unmittelbar wieder geschlossen werden, so daß immer möglichst viele Trennschalter geschlossen sind, was vorteilhafte Programme ermöglicht. Desweiteren kann jedem Trennschalter eine Meßeinrichtung 18 zugeordnet sein (gestrichelt dargestellt), die auch bei offenem Trennschalter ermittelt, ob der zugehörige Betriebsschalter offen oder geschlossen ist. Auf diese oder die vorgenannte Weise kann die Koordinationseinrichtung 14 erfassen, in welcher Reihenfolge Betriebsschalter geschlossen werden, ohne daß die zugehörigen Verbraucher aufgrund des Überschreitens des Grenzwerts in Betrieb gesetzt werden. Die Reihenfolge des Schließens der Betriebsschalter kann somit durch geeignete Software in der Koordinationseinrichtung 14 die Reihenfolge der Inbetriebsetzung der zugehörigen Verbraucher, d.h. das Schließen der zugehörigen Trennschalter bestimmen.

In einer weiteren Ausführungsform können beispielsweise nach einer Abnahme der Gesamtleistungsaufnahme, die beispielsweise dadurch bedingt ist, daß nur eine Herdplatte außer Betrieb gesetzt wird, oder ein Verbraucher von einer Heizphase in eine weniger Leistung aufnehmende Betriebsphase übergeht, der Reihe nach alle Trennschalter betätigt werden und nur derjenige Trennschalter geschlossen bleiben, dessen Schließen zu keiner Überschreitung des Grenzwerts führt. Auf diese Weise ist gewährleistet, daß die maximal zulässige Leistungsaufnahme jeweils möglichst weitgehend ausgenutzt wird.

Für einen flexiblen Betrieb der Vorrichtung kann es auch vorteilhaft sein, wenn die offenen Tastschalter in bestimmten Zeitintervallen kurzzeitig geschlossen werden, um geschlossen zu bleiben, wenn die zugehörigen Betriebsschalter offen sind oder gleich wieder geöffnet werden, wenn die zugehörigen Betriebsschalter geschlossen sind, wobei dann die Information über die Schließstellung der Betriebsschalter vorliegt.

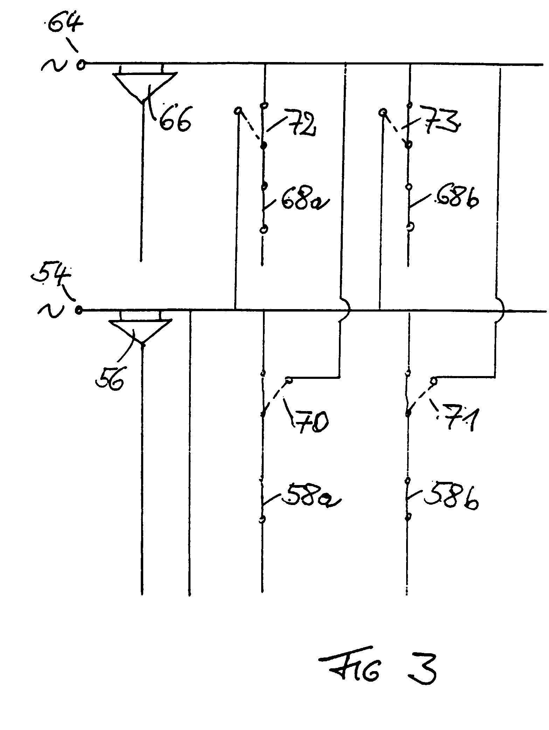

Fig. 3 zeigt eine Weiterentwicklung der Ausführungsform gemäß Fig. 1, bei der der Stromversorgungsanschluß zwei Phasen, 54 und 64, aufweist. Jede Phase versorgt eine Anordnung gemäß Fig. 1 mit einer Leistungsmeßeinrichtung 56 bzw. 66, Sicherungen 58a, 58b bzw. 68a, 68b usw.. Beide Einrichtungen sind an eine gemeinsame Koordinationseinrichtung (nicht dargestellt) angeschlossen. Da der Fall auftreten kann, daß eine Phase bereits bis zum zulässigen Grenzwert belastet ist, die andere Phase aber noch zulässige Reserven aufweist, sind den einzelnen Verbrauchern Umschalter 70, 71, 72 und 73 zugeordnet, mit denen die Verbraucher auf jeweils eine andere Phase gelegt werden können, um sie von dort her mit Energie zu versorgen, falls der zulässige Grenzwert nicht überschritten wird. Die Umschalter 70 bis 73 werden von der Koordinationseinrichtung gesteuert. Somit können bei mehrphasigen Stromversorgungsanschlüssen Grenzwerte für die Belastung der einzelnen Phasen und die gesamte Leistungsaufnahme der Verbrauchereinheit vorgegeben werden.

## Patentansprüche

1. Vorrichtung zur Begrenzung der Leistungsaufnahme eines aus einem Energieversorgungsanschluß (4; 54, 64) gespeisten Haushaltes, welcher mehrere Verbraucher (2-2e) umfaßt,
mit einer Einrichtung (6) zur Erfassung der Leistungsaufnahme des Haushaltes;
mit wenigstens einigen der Verbraucher zugeordneten Trennschaltern (12b-12e); und
mit einer Koordinationseinrichtung (14), welche mit den Trennschaltern (12b-12e) verbunden ist und diese nach einem Programm derart steuert, daß die Leistungsaufnahme des Haushaltes aus dem Energieversorgungsanschluß einen vorbestimmten Grenzwert nicht überschreitet,
wobei die Koordinationseinrichtung (14) bei Überschreiten des vorbestimmten Grenzwertes der Leistungsaufnahme die Trennschalter in einer durch ein in ihr abgelegtes, vorwählbares Koordinationsprogramm festgelegten Reihenfolge öffnet und bei Unterschreiten schließt, und
wobei die Koordinationseinrichtung (14) nach einem Abfall der Leistungsaufnahme unter den Grenzwert einen weiteren Trennschalter schließt, wenn das Schließen eines ersten Trennschalters zu einem Überschreiten des Grenzwertes und damit erneutem Öffnen dieses Trennschalters führt.

2. Vorrichtung nach Anspruch 1, dadurch gekennzeichnet, daß die Koordinationseinrichtung (14) eine Uhr (22) enthält, welche den Grenzwert und/oder verschiedene Priorisierungsprogramme für die festgelegte Reihenfolge einstellt.

3. Vorrichtung nach einem der Ansprüche 1 oder 2, dadurch gekennzeichnet, daß die Einrichtung (18) zum Erkennen des Schließens von in Reihe zu den Trennschaltern (12b-12e) liegenden, manuell betätigbaren Betriebsschaltern (10b-10e) der einzelnen Verbraucher vorgesehen ist und die Reihenfolge des Schließens der Betriebsschalter die Reihenfolge des Schließens der zugehörigen Trennschalter bestimmt.

4. Vorrichtung nach einem der Ansprüche 1 bis 3, dadurch gekennzeichnet, daß
eine Sicherungseinheit mit Sicherungen (8a-8e; 58a, 58b, 68a, 68b) vorgesehen ist, über die die einzelnen Verbraucher an den Netzanschluß angeschlossen sind,
und daß die einzelnen Trennschalter (12b-12e) in Reihe zu den einzelnen Sicherungen geschaltet sind.

5. Vorrichtung nach einem der Ansprüche 1 bis 4, dadurch gekennzeichnet, daß die Trennschalter (12b-12e) mit weiteren zugehörigen Komponenten in einem gemeinsamen Gehäuse einer nachrüstbaren Einheit zusammengefaßt sind.

6. Vorrichtung nach Anspruch 1 und 5, dadurch gekennzeichnet, daß eine manuelle betätigbare Eingabeeinheit (24) einer programmierbaren, elektronischen Steuereinheit von dem die Trennschalter (12b-12e) enthaltenden Gehäuse entfernt angeordnet ist.

7. Vorrichtung nach einem der Ansprüche 4 bis 6, dadurch gekennzeichnet, daß die Verbrauchereinheit an mehrere Phasen (54, 64) der Stromversorgung angeschlossen ist und daß von der Koordinationseinrichtung gesteuerte Umschalter (70, 71, 72, 73) vorgesehen sind, mit denen sich die einzelnen Verbraucher wahlweise an unterschiedlichen Phasen anschließen lassen.

## Claims

1. Apparatus for limiting the power consumption of a household which is supplied from a power supply connection (4; 54, 64) and which includes a plurality of consumers (2-2e), comprising
a device (6) for detecting the power consumption of the household;
circuit breaker switches (12b-12e) associated with at least some of the consumers; and
a co-ordination means (14) which is connected to the circuit breaker switches (12b-12e) and controls them in accordance with a program in such a way that the power consumption of the household from the power supply connection does not exceed a predetermined limit value,
wherein the co-ordination means (14) opens the circuit breaker switches in a sequence which is determined by a preselectable co-ordination program stored in it when the predetermined power consumption limit value is exceeded and closes them when the power consumption falls below the predetermined limit value, and
wherein after a drop in the power consumption below the limit value the co-ordination means (14) closes a further circuit breaker switch if the closing of a first circuit breaker switch results in the limit value being exceeded and thus renewed opening of that circuit breaker switch.

2. Apparatus according to claim 1 characterised in that the co-ordination means (14) includes a clock (22) which adjusts the limit value and/or various prioritisation programs for the established sequence.

3. Apparatus according to one of claims 1 and 2 characterised in that there is provided the device (18) for recognising closure of manually actuable operating switches (10b-10e) of the individual consumers, which operating switches are in series with the circuit breaker switches (12b-12e), and the sequence of closing of the operating switches determines the sequence of closing of the associated circuit breaker switches.

4. Apparatus according to one of claims 1 to 3 characterised in that
there is provided a fuse unit with fuses (8a-8e; 58a, 58b, 68a, 68b) by way of which the individual consumers are connected to the mains connection, and
the individual circuit breaker switches (12b-12e) are connected in series with the individual fuses.

5. Apparatus according to one of claims 1 to 4 characterised in that the circuit breaker switches (12b-12e) with further associated components are combined together in a common housing of a unit which can be subsequently fitted.

6. Apparatus according to claims 1 and 5 characterised in that a manually actuable input unit (24) of a programmable electronic control unit is arranged remote from the housing containing the circuit breaker switches (12b-12e).

7. Apparatus according to one of claims 4 to 6 characterised in that the consumer unit is connected to a plurality of phases (54,64) of the power supply and that there are provided change-over switches (70, 71, 72, 73) which are controlled by the co-ordination means and with which the individual consumers can be selectively connected to different phases.

## Revendications

1. Appareil pour limiter le prélèvement de puissance d'un foyer alimenté par un branchement de fourniture d'énergie (4 ; 54, 64), ledit foyer comprenant plusieurs consommateurs (2 - 2e), comprenant :
- un dispositif (6) pour déterminer le prélèvement de puissance du foyer ;
- des commutateurs de coupure (12b-12e) associés à au moins quelques consommateurs ; et
- un dispositif de coordination (14), lequel est relié aux commutateurs de coupure (12b - 12e) et commande ceux-ci suivant un programme, de telle manière que le prélèvement de puissance du foyer depuis le branchement de fourniture d'énergie ne dépasse pas une valeur limite prédéterminée,
dans lequel le dispositif de coordination (14) ouvre les commutateurs de coupure lors d'un dépassement de la valeur limite prédéterminée, dans une succession déterminée par un programme de coordination mémorisé dans lui-même et susceptible d'être préalablement choisi, et ferme lesdits commutateurs lors d'un passage au-dessous de ladite valeur limite, et
le dispositif de coordination (14) ferme, après une chute du prélèvement de puissance au-dessous de la valeur limite, un autre commutateur de coupure au cas où la fermeture d'un premier commutateur de coupure mène à un dépassement de la valeur limite et ainsi à une nouvelle ouverture de ce commutateur de coupure.

2. Appareil selon la revendication 1, caractérisé en ce que le dispositif de coordination (14) contient une horloge (22) qui établit la valeur limite et/ou différents programmes d'attribution de priorité pour la succession fixée.

3. Appareil selon l'une ou l'autre des revendications 1 et 2, caractérisé en ce que le dispositif (18) est prévu pour reconnaître la fermeture de commutateurs de service à actionnement manuel (10b - 10e) des consommateurs individuels, disposés en série avec les commutateurs de coupure (12b - 12e), et en ce que la succession de fermeture des commutateurs de service détermine la succession de la fermeture des commutateurs de coupure associés.

4. Appareil selon l'une des revendications 1 à 3, caractérisé en ce qu'il est prévu une unité de sécurité avec des fusibles (8a - 8e ; 58a, 58b, 68a, 68b), au moyen de laquelle les consommateurs individuels sont raccordés aux branchements de réseau, et en ce que les commutateurs de coupure individuels (12b - 12e) sont branchés en série avec les fusibles individuels.

5. Appareil selon l'une des revendications 1 à 4, caractérisé en ce que les commutateurs de coupure (12b - 12e) sont regroupés, avec d'autres composants associés, dans un boîtier commun d'une unité à monter a posteriori.

6. Appareil selon les revendications 1 et 5, caractérisé en ce qu'une unité de saisie à actionnement manuel (24), d'une unité de commande électronique programmable, est agencée à distance du boîtier qui contient les commutateurs de coupure (12b - 12e).

7. Appareil selon l'une des revendications 4 à 6, caractérisé en ce que l'unité de consommation est raccordée à plusieurs phases (54, 64) de l'alimentation électrique, et en ce qu'il est prévu des inverseurs (70, 71, 72, 73) commandés par le dispositif de coordination, au moyen desquels les consommateurs individuels peuvent être raccordés au choix à des phases différentes.
